Europäisches Patentamt

European Patent Office

Office européen des brevets

(11) Publication number: **0 274 369**
**B1**

# EUROPEAN PATENT SPECIFICATION

(45) Date of publication of the patent specification:
12.09.90

(21) Application number: 87870165.5

(22) Date of filing: 03.12.87

(51) Int. Cl.⁵: **A01N 57/20**, A01N 59/02
// (A01N59/02, 57:20,
25:30),(A01N57/20, 25:30)

(54) Glyphosate-ammonium sulfate herbicidal formulation.

(30) Priority: 04.12.86 JP 289734/86

(43) Date of publication of application:
13.07.88 Bulletin 88/28

(45) Publication of the grant of the patent:
12.09.90 Bulletin 90/37

(84) Designated Contracting States:
AT BE CH DE ES FR GB GR IT LI LU NL SE

(56) References cited:
CHEMICAL ABSTRACTS, vol. 93, no. 25, 22nd
December 1980, page 232, abstract no. 232545e,
Columbus, Ohio, US; D.J. TURNER et al.: "Effect of
ammonium sulfate and other additives upon the
phytotoxicity of glyphosate to Agropyron repens (L.)
Beauv"

(73) Proprietor: Monsanto Company, Patent
Department 800 North Lindbergh Boulevard, St. Louis
Missouri 63167-7020(US)

(72) Inventor: Sato, Tatsuo, 1-36-38, Midorigaoka, Chofy
Tokyo(JP)
Inventor: Kuchikata, Masuo, 158-1, Sanuki, Ryugasaki
Ibaraki Pref.(JP)

(74) Representative: Lunt, John Cooper et al, Monsanto
Europe S.A. Patent Department Avenue de
Tervuren 270-272 Letter Box No 1, B-1150 Brussels(BE)

## Description

### Field of the Invention

This invention relates to a novel aqueous concentrate herbicidal formulation containing both glyphosate and ammonium sulfate.

### Description of the Prior Art

Glyphosate (N-phosphonomethylglycine) is well-known in the art as an effective herbicide. It is known in the art that glyphosate, which is an organic acid, is relatively insoluble in water. Therefore, glyphosate is normally formulated and applied as a water-soluble salt, especially as the isopropylamine salt (IPA salt). Various formulations of glyphosate are disclosed in U.S. Patents 4,405,531, 3,977,860 and 3,853,530. Roundup® Herbicide comprising the IPA salt of glyphosate is sold by Monsanto Company as an aqueous concentrate formulation which is diluted in water prior to application.

Researchers have suggested that formulated mixtures of glyphosate and ammonium sulfate are, in many cases, more efficacious than formulated glyphosate alone. (Weed Research 1975 vol. 15, 13-19; and 1980 vol. 20, 139-146). Unfortunately, such formulations of glyphosate and ammonium sulfate with surfactants will salt out upon standing for relatively short periods of time. The short shelf life of these mixture formulations makes them commercially unacceptable. Therefore, the farmer is generally required to tank mix the glyphosate-ammonium sulfate mixture on site just prior to use. This inconvenience has resulted in farmers avoiding the use of glyphosate-ammonium sulfate mixtures.

It is desired in the art to find a shelf-stable, aqueous, concentrate formulation containing both glyphosate and ammonium sulfate.

### Summary of the Invention

The present invention relates to a herbicidal aqueous concentrate glyphosate/ammonium sulfate formulation comprising a water-soluble glyphosate salt, ammonium sulfate and a quaternary ammonium salt. Suitable classes of quaternary ammonium salts useful in the present invention include quaternized long chain amines; quaternized polyoxyalkylenated long chain amines; quaternary salts of pyridines; quaternary salts of carboxylated imidazolines (open and closed chain) and trialkyl betaines. Trialkylamine oxides which comprise a class of compounds which form quaternary ammonium hydroxide salts upon addition to water are also useful in the practice of the present invention. Other general classes of quaternary ammonium salts useful in the practice of the present invention will be known to those skilled in the art.

Preferred subclasses of quaternary ammonium salts for use in the present invention are alkylloweralkyl, dihydroxyloweralkyl ammonium chlorides; alkyl, triloweralkyl ammonium chlorides; carboxymethylated imidazoline and alkyldiloweralkyl betaines.

The formulation of the present invention is shelf-stable to enable its commercial distribution as one package mixture. The formulation can be easily used by the farmer and is readily diluted in water prior to its use. The formulation avoids the problems of having to tank mix the glyphosate-ammonium sulfate mixture on site just prior to use.

A more thorough disclosure of the present invention is presented in the detailed description which follows.

### Detailed Description of the Invention

The present invention relates to a herbicidal, aqueous concentrate formulation of glyphosate and ammonium sulfate comprising water-soluble glyphosate salt, ammonium sulfate and quaternary ammonium salt. The formulation also contains water. The formulation of the present invention is shelf-stable in that it does not experience salting out of ingredients when stored for prolonged periods of time at lower ambient temperatures (e.g. temperatures as low as 0°C and lower). The shelf-stability of the formulation of the present invention enables its commercial distributions as a one package mixture.

The formulation of the present invention contains a water-soluble salt of glyphosate. Several processes for the preparation of glyphosate are disclosed in the patent and chemical literature, e.g., U.S. Patents 3,977,860 and 4,486,358. Suitable water-soluble salts of glyphosate useful in the present invention are disclosed in U.S. Patent 4,405,531. The isopropyl amine salt of glyphosate is preferred in the formulation of the present invention.

Commercially available fertilizer grade ammonium sulfate may be used in the formulation of the present invention. Other grades of ammonium sulfate useful in the practice of the present invention will be known to those skilled in art. During the formulation process, the formulations are normally filtered to remove any insoluble particulate materials which may be present in some commercial grades of ammonium sulfate.

The key feature of the formulation of the present invention is the quaternary ammonium salt. A variety of quaternary ammonium salts can be utilized in the practice of the present invention. Suitable anions for the quaternary ammonium salts of the present invention include the chloro anion, hydroxy anion and the phosphate anion. Other suitable anions will be known to those skilled in the art. The quaternary ammonium salt functions to stabilize the formulation. Suitable classes, subclasses and species of quaternary ammonium salts for use in the present invention are as follows:

1. quaternized long chain amines:
   a) alkyl, triloweralkyl ammonium chloride
      i) trimethyl coco ammonium chloride
      (coco = $C_{12}$-$C_{15}$ alkyl)
      ii) trimethyl octadecyl ammonium chloride
   b) dialkyl, diloweralkyl ammonium chloride
      i) dimethyl, dioctadecyl ammonium chloride
2. quaternized polyoxyalkylenated long chain amines:
   a) dialkyl dihydroxyethyl ammonium chloride
      i) methyl bis(2-hydroxyethyl) coco ammonium chloride
      ii) methyl bis(2-hydroxyethyl) lauryl ammonium chloride
      iii) methyl bis(2-hydroxyethyl) oleo ammonium chloride
   b) alkyl di(polyoxyethylene) lower alkyl ammonium chloride
      i) methyl bis(omegahydroxypoly(oxyethylene)coco) ammonium chloride where the polyoxyethylene is derived from 3-20 moles of ethylene oxide
      ii) methyl bis(omegahydroxypoly(oxyethylene)oleo) ammonium chloride where the polyoxyethylene is derived from 3-20 moles of ethylene oxide
   c) hydroxyalkyl polyoxyethylene diloweralkyl ammonium chloride
      i) hydroxyethyl dimethyl polyoxyethylene (2 moles) ammonium chloride
   d) alkyl tri(polyoxyethylene) ammonium phosphate
      i) lauryl tripolyoxyethylene ammonium phosphate
3. quaternized pyridines
   i) N-octyl pyridine chloride
   ii) N-dodecyl pyridine chloride
4. quaternized carboxylated imidazolines (closed and open chain).
   i) N-carboxymethyl N-aminoethyl undecyl imidazoline
   ii) N-carboxy N-hydroxyethyl undecyl imidazoline
   iii) N-carboxymethyl N-aminoethyl-(N′,N′-dicarboxymethyl) undecyl imidazoline
   iv) N-carboxymethyl N-(carboxymethoxy) ethyl undecyl imidazoline
   v) N-carboxymethyl N-hydroxyethyl heptadecyl imidazoline (* stearoamphoglycinate)
   iv) N-carboxymethyl N-hydroxyethyl undecyl imidazoline (* lauroamphoglycinate) * Official nomenclature of Cosmetics, Toiletry and Fragrance Association as listed in CTFA Cosmetic Ingredient Dictionary 3rd Edition. *As above.
5. trialkyl betaines
   a) alkyl, diloweralkyl betaines
      i) lauryl dimethyl betaine
      ii) stearyl dimethyl betaine
      iii) coco dimethyl betaine
      iv) decyl dimethyl betaine
6. amine oxides
   a) trialkylamine oxides
      i) lauryl dimethyl amine oxide
      ii) stearyl dimethyl amine oxide
   b) dihydroxyethyl alkyl amine oxide
      i) dihydroxyethyl octyl amine oxide
      ii) dihydroxyethyl dodecyl amine oxide
      iii) dihydroxyethyl tallowamine oxide
   c) di(polyhydroxyethylene) alkyl amine oxide
      i) bis(polyoxyethylene) tallowamine oxide
   d) loweralkyl polyoxyethylene alkyl amine oxide
      i) methyl polyoxyethylene (2 mole) cocoamine oxide

Other general class, subclasses and species of quaternary ammonium salts useful in the practice of the present invention will be known to those skilled in the art. Certain quaternary ammonium salts will provide for more stable formulation than others and those skilled in the art will be able to readily optimize formulations of the present invention by selection of suitable quaternary ammonium salts and by varying the concentration of the formulation ingredients.

Quaternary ammonium salts useful in the formulation of the present invention are commercially available from a number of manufacturers and are generally described in McCutcheon's Detergents and Emul-

sifiers, North American Edition 1985 Annual and in McCutcheon's Detergent and Emulsifiers International Edition 1985.

The formulations may optionally contain a secondary surfactant. A suitable class of secondary surfactant are the nonionic surfactants. Suitable nonionic surfactants are polyoxyethylene alkylphenylether, polyoxyethylene oleyl ether and dialkylene glycol monoalkyl ether. Additional suitable secondary nonionic surfactants are set forth in U.S. Patent 4,405,531. Other suitable nonionic surfactants will be known to those skilled in the art.

The water-soluble concentrate formulations of the present invention are comprised as follows:

|  | Weight Percent* | |
| --- | --- | --- |
|  | General | Preferred |
| 1. Water soluble salt of glyphosate (based on 62.6% active ingredient a.i.) | 10%–50% | 20%–40% |
| 2. Ammonium sulfate | 10%–50% | 20%–40% |
| 3. Quaternary ammonium salt | 2%–20% | 3%–15% |
| 4. Water | remainder | remainder |

* % by weight of total composition

The formulations of the present invention may be generally prepared by mixing the ingredients together in a blender. The formulations of the present invention may also be admixed with other additives such as urea, thickening agents, anti-foam agents such as silicones, water-repellants, humectants, chelating agents, dyes, dispersing agents, and other active ingredients such as herbicides and fungicides or the like.

The formulations of the present invention can be readily diluted in water by the farmer in a spray tank prior to use. Suitable application rates of glyphosate will vary depending on plant species, but generally 90 to 360 grams per hectare on an acid equivalent basis will be suitable.

The following examples are presented to illustrate the present invention as well as some of the various embodiments of the invention. These examples are presented as being illustrative of the novel formulations and are not intended to be a limitation of the scope thereof.

Examples I-VIII show suitable formulation in accordance with the present invention. Example IX demonstrates the efficacy of the formulations of the present invention.

Example I

218 g of aqueous solution of IPA salt of glyphosate containing 62.6% by weight of the IPA salt, 270 g of ammonium sulfate powder, 23 g of methyl bis (2-hydroxyethyl) coco ammonium chloride, 3 g of polyoxyethylenealkyl phenyl ether and 486 g of water are mixed in an agitator at room temperature until the surfactant and ammonium sulfate are dissolved and the solution becomes clear. Usually about 10 minutes is sufficient. This mixing process does not require high shearing nor heating. The resulting formulation is clear. This formulation showed acceptable stability in accelerated aging tests. In two one-month accelerated aging tests where the temperature was set at -5°C for one test and 60°C for the other test, the formulation showed acceptable stability in both tests in that the formulation did not show any change in the appearance, the active ingredient content, and the physical properties such as cloud point, dilution property and the like.

The composition of the formulation of Example 1 was as follows:

| Ingredient | Percent by Weight |
| --- | --- |
| Aqueous solution of IPA salt of glyphosate (62.6% active ingredient (a.i.) | 21.8 |
| Ammonium sulfate (99.5%) | 27.0 |
| Methyl bis (2-hydroxyethyl) coco ammonium chloride | 2.3 |
| Polyoxyethylenealkyl phenyl ether | 0.3 |
| Water | 48.6 |
| TOTAL | 100.0 |

4

Example II

218 g of aqueous solution of IPA salt of glyphosate (62.6% a.i.), 217 g of ammonium sulfate powder, 134 g of lauryl dimethyl amine oxide, and 377 g of water are mixed gently by an agitator for about 10 minutes. This formulation also showed acceptable stability in one month accelerated aging tests according to Example I.

The composition of the formulation of Example II was as follows:

| Ingredient | Percent by Weight |
|---|---|
| Aqueous solution of IPA salt of glyphosate (62.6% a.i.) | 21.8 |
| Ammonium sulfate (99.5%) | 27.1 |
| Lauryl dimethyl amine oxide | 13.4 |
| Water | 37.7 |
| TOTAL | 100.0 |

Example III

The composition of this formulation was as follows:

| Ingredient | Percent by Weight |
|---|---|
| Aqueous solution of IPA salt of glyphosate (62.6% a.i.) | 21.7 |
| Ammonium sulfate (99.5%) | 27.0 |
| Methyl bis (2-hydroxyethyl) lauryl ammonium chloride | 6.7 |
| Water | 44.6 |
| TOTAL | 100.0 |

This formulation was prepared in accordance with the procedure of Example II and showed acceptable stability in one month accelerated aging tests according to Example I.

Example IV

The composition of this formulation was as follows:

| Ingredient | Percent by Weight |
|---|---|
| Aqueous solution of IPA salt of glyphosate (62.6% a.i.) | 25.8 |
| Ammonium sulfate (99.5%) | 32.0 |
| Trimethyl coco ammonium chloride | 8.0 |
| Water | 34.2 |
| TOTAL | 100.0 |

This formulation was prepared in accordance with the procedure of Example II and showed acceptable stability in one month accelerated aging tests according to Example I.

Example V

The composition of this formulation was as follows:

| Ingredient | Percent by Weight |
|---|---|
| Aqueous solution of IPA salt of glyphosate (62.6% a.i.) | 25.9 |
| Ammonium sulfate (99.5%) | 32.2 |
| N-carboxymethyl N-aminoethyl undecyl imidazoline | 8.0 |
| Water | 33.9 |
| TOTAL | 100.0 |

This formulation was prepared in accordance with the procedure of Example II and showed acceptable stability in one month accelerated aging tests according to Example I.

Example VI

The composition of this formulation was as follows:

| Ingredient | Percent by Weight |
|---|---|
| Aqueous solution of IPA salt of glyphosate (62.6% a.i.) | 21.9 |
| Ammonium sulfate (99.5%) | 29.3 |
| N,N-dimethyl-N-alkyl-N-carboxymethyl ammonium chloride | 6.8 |
| Water | 42.0 |
| TOTAL | 100.0 |

This formulation was prepared in accordance with the procedure of Example II and showed acceptable stability in one month accelerated aging tests according to Example I.

Example VII

The following seven formulations were prepared by standard procedures as set forth in Examples I-VI and showed acceptable stability in 1 week accelerated aging tests where the temperature was set at -5°C and 60°C. Each formulation comprised the following:

| Ingredient | gms/liter |
|---|---|
| Aqueous solution of IPA salt of glyphosate (62.6% a.i.) | 120 |
| Ammonium sulfate (99.5%) | 320 |
| Surfactant | 80 |

The surfactants for the seven formulations were as follows:

a) lauryl dimethyl betaine
b) stearyl dimethyl betaine
c) N-octyl pyridine chloride
d) lauryl, trimethyl ammonium chloride
e) N-octadecyl methyl pyridine chloride
f) lauryl, methyl dihydroxyethyl ammonium chloride
g) N-carboxymethyl N-hydroxyethyl lauryl imidazoline

Example VIII

The following formulations were prepared by standard procedure and demonstrated acceptable formulation characteristics. Each formulation comprised 2.22 grams of an aqueous solution of IPA salt of glyphosate (62.6% a.i.); 1.9 grams of ammonium sulfate; a quaternary ammonium salt (CTFA name*) and water.

| CLASS – Quaternized Imidazolines | |
| --- | --- |
| 1. Caproamphoglycinate (37% a.i.) | 1.12 g |
| Water | 4.76 g |
| 2.. Capryloamphocarboxypropionate | 1.03 g |
| Water (40% a.i.) | 4.85 g |
| 3. Capryloamphopropionate | 1.09 g |
| Water | 4.79 g |
| 4. Cocoamphopropionate (potassium salt) (45% a.i.) | 0.91 g |
| Water | 4.96 g |
| 5. Mixed short chain alkyl amphopropionate | 0.41 g |
| Water | 5.47 g |

\* Official nomenclature of Cosmetics, Toiletry and Fragrance Association.

| CLASS – Quaternized Polyethoxyethylenated long chain amines | |
| --- | --- |
| 9. Methyl bis (2-hydroxyethyl) coco ammonium chloride | 0.56 g |
| Water | 5.32 g |
| 10. Methyl bis (2-hydroxyethyl) oleo ammonium chloride | 0.57 g |
| Water | 5.31 g |

Example IX

Mixtures of water-soluble salts of glyphosate and ammonium sulfate are well known in the art to be efficacious as a post-emergent herbicide. The following demonstrates the biological efficacy of the formulation of the present invention when applied to established stands of difficult to control weeds.

| | | Weed = Imperata Cylindrica Percent Injury at Days | | |
| --- | --- | --- | --- | --- |
| | Glyphosate acid rate | After | Treatment | (DAT) |
| | kg/ha | 15 | 30 | 90 DAT |
| 1. Formulation of Example I | 1.08 | 30 | 40 | 65 |

| | | Weeds | |
| --- | --- | --- | --- |
| | | Velvetleaf | Seedling Johnson Grass |
| | Glyphosate acid rate | Percent | Injury at DAT |
| | kg/ha | 21 DAT | 21 DAT |
| 2. Formulation of Example I | 0.28 | 68 | 85 |
| | 0.52 | 88 | 90 |
| | 0.84 | 100 | 100 |

|  | Glyphosate acid rate kg/ha | Weed = Commelina Communis | |
|---|---|---|---|
|  |  | Percent 13 DAT | Injury at DAT 48 DAT |
| 3. Formulation of Example V | 1.8 | 8 | 45 |
|  | 3.6 | 11 | 52 |

## Claims

1. An aqueous concentrate herbicidal formulation a comprising water soluble glyphosate salt, ammonium sulfate and quaternary ammonium salt.

2. The formulation of Claim 1 wherein the water-soluble glyphosate salt is the isopropyl amine salt.

3. The formulation of Claim 1 wherein the quaternary ammonium salt is a quaternized polyoxyethylenated long chain amine.

4. The formulation of Claim 3 wherein the quaternary ammonium salt is dialkyl dihydroxyethyl ammonium chloride.

5. The formulation of Claim 4 wherein the quaternary ammonium salt is methyl bis (2-hydroxyethyl)coco ammonium chloride.

6. The formulation of Claim 1 wherein the quaternary ammonium salt is a quaternized long chain amine.

7. The formulation of Claim 6 wherein the quaternary ammonium salt is trimethyl coco ammonium chloride.

8. The formulation of Claim 1 wherein the quaternary ammonium salt is a quaternized carboxylated imidazoline.

9. The formulation of Claim 8 wherein the quaternary ammonium salt is N-carboxymethyl N-aminoethyl (N′,N′-dicarboxymethyl) undecyl imidazoline.

10. The formulation of Claim 1 wherein the quaternary ammonium salt is a quaternized pyridine.

11. The formulation of Claim 10 wherein the quaternary ammonium salt is N-octyl pyridine chloride.

12. The formulation of Claim 1 wherein the quaternary ammonium salt is trialkyl betaine.

13. An aqueous concentrate herbicidal formulation comprising a water soluble salt of glyphosate, ammonium sulfate and trialkyl amine oxide.

14. The formulation of Claim 13 wherein the salt of glyphosate is the isopropyl amine salt.

15. The formulation of Claim 14 wherein the trialkyl amine oxide is lauryl dimethyl amine oxide.

## Patentansprüche

1. Wässerige herbizide Konzentratformulierung umfassend ein wasserlösliches Glyphosatsalz, Ammoniumsulfat und ein quaternäres Ammoniumsalz.

2. Formulierung nach Anspruch 1, worin das wasserlösliche Glyphosatsalz das Isopropylaminsalz ist.

3. Formulierung nach Anspruch 1, worin das quaternäre Ammoniumsalz ein quaternisiertes polyoxyäthyleniertes langkettiges Amin ist.

4. Formulierung nach Anspruch 3, worin das quaternäre Ammoniumsalz Dialkyldihydroxyäthylammoniumchlorid ist.

5. Formulierung nach Anspruch 4, worin das quaternäre Ammoniumsalz Methyl-bis-(2-hydroxyäthyl)-kokosammoniumchlorid ist.

6. Formulierung nach Anspruch 1, worin das quaternäre Ammoniumsalz ein quaternisiertes langkettiges Amin ist.

7. Formulierung nach Anspruch 6, worin das quaternäre Ammoniumsalz Trimethylkokosammoniumchlorid ist.

8. Formulierung nach Anspruch 1, worin das quaternäre Ammoniumsalz ein quaternisiertes carboxyliertes Imidazolin ist.

9. Formulierung nach Anspruch 8, worin das quaternäre Ammoniumsalz N-Carboxymethyl-N-aminoäthyl-(N′,N′-dicarboxymethyl)-undecylimidazolin ist.

10. Formulierung nach Anspruch 1, worin das quaternäre Ammoniumsalz ein quaternisiertes Pyridin ist.

11. Formulierung nach Anspruch 10, worin das quaternäre Ammoniumsalz N-Octylpyridinchlorid ist.

12. Formulierung nach Anspruch 1, worin das quaternäre Ammoniumsalz Trialkylbetain ist.

13. Wässerige herbizide Konzentratformulierung umfassend ein wasserlösliches Salz von Glyphosat, Ammoniumsulfat und Trialkylaminoxid.

14. Formulierung nach Anspruch 13, worin das Salz von Glyphosat das Isopropylaminsalz ist.

15. Formulierung nach Anspruch 14, worin das Trialkylaminoxid Lauryldimethylaminoxid ist.

## Revendications

1. Formule herbicide de concentré aqueux comprenant un sel de glyphosate soluble dans l'eau, du sulfate d'ammonium et un sel d'ammonium quaternaire.

2. Formule selon la revendication 1, dans laquelle le sel de glyphosate soluble dans l'eau est le sel d'isopropyl amine.

3. Formule selon la revendication 1, dans laquelle le sel d'ammonium est une amine à longue chaîne polyoxyéthylénée quaternisée.

4. Formule selon la revendication 3, dans laquelle le sel d'ammonium quaternaire est un chlorure de dialkyle dihydroxyéthyl ammonium.

5. Formule selon la revendication 4, dans laquelle le sel d'ammonium quaternaire est le chlorure de méthyle bis (2-hydroxyéthyl)-coprah-ammonium.

6. Formule selon la revendication 1, dans laquelle le sel d'ammonium quaternaire est une amine à longue chaîne quaternisée.

7. Formule selon la revendication 6, dans laquelle le sel d'ammonium quaternaire est le chlorure de triméthyl coprah ammonium.

8. Formule selon la revendication 1, dans laquelle le sel d'ammonium quaternaire est une imidazoline carboxylée quaternisée.

9. Formule selon la revendication 8, dans laquelle le sel d'ammonium quaternaire est la N-carboxyméthyl N-aminoéthyl (N',N'-dicarboxyméthyl) undécyl imidazoline.

10. Formule selon la revendication 1, dans laquelle le sel d'ammonium quaternaire est une pyridine quaternisée.

11. Formule selon la revendication 10, dans laquelle le sel d'ammonium quaternaire est le chlorure de N-octyl pyridine.

12. Formule selon la revendication 1, dans laquelle le sel d'ammonium quaternaire est une trialkyl-bétaïne.

13. Formule herbicide de concentré aqueux comprenant un sel soluble dans l'eau de glyphosate, du sulfate d'ammonium et un oxyde de trialkyl amine.

14. Formule selon la revendication 13, dans laquelle le sel de glyphosate est le sel d'isopropyl amine.

15. Formule selon la revendication 14, dans laquelle l'oxyde de trialkyl amine est l'oxyde de lauryle diméthyl amine.